# EUROPEAN PATENT APPLICATION

(11) **EP 4 353 448 A1**
(43) Date of publication of application: **17.04.2024**
(21) Application number: 22425048.0
(22) Date of filing: 12.10.2022
(51) Int. Cl.: B29C 64/112, B33Y 10/00, B33Y 30/00, B33Y 70/00, B33Y 80/00, B44C 3/02, B44C 5/04, B28B 1/00

(54) **DEVICE FOR ADDITIVE PRINTING OF AN EMBOSSED SURFACE FOR THE DECORATION OF CERAMIC TILES AND CORRESPONDING ADDITIVE PRINTING METHOD**

(71) Applicant: NEOS S.r.l., 41042 Fiorano Modenese (MO) (IT)
(72) Inventor: PALUMBO, Vincenzo, 41042 Fiorano Modenese (MO) (IT)
(74) Representative: Botti & Ferrari S.p.A.

(57) **Abstract**

Device for additive printing which, through a single step, deposits an ink for providing, on a printing area, at least one embossed decorative pattern or low relief to be impressed on the malleable surface of ceramic products, comprising:
- a frame (10) comprising at least one printing module (3);
- one or more print heads housed in the printing module (3) and comprising a plurality of nozzles (5) facing a printing area (S) arranged to support said product (20), said nozzles (5) being arranged to cover an entire printing area (Y) in order to deposit an additive ink on said product (20);
- movement means (21) arranged to provide a relative movement between said product (20) and said at least one printing module (3) along a longitudinal direction (X) transversal to said printing area (Y);
- solidification means of said additive ink placed to cover the entire printing area (Y) downstream said nozzles according to a preferred advancing direction of the printing along said longitudinal direction (X).

## Description

### Field of application

The present invention refers to a device for the additive printing comprising a solidification means for solidifying the ink layers.

The invention also refers to an additive printing method by means of the device mentioned above.

The invention can particularly find useful application for providing the work surfaces of pads for decorating the surface of green-state ceramic products, that is they are still not dried/baked.

The invention can also find application in different fields of the additive printing with reference to the ceramic tiles, for example it can be used for a direct printing of embossments on ceramic products.

### Prior art

In the field of production of ceramic products, the usage of pads having a pattern or an embossed decoration or low relief to be impressed on the surface of the green-state products is known.

Generally, the pads are pressed against the surface of a ceramic product, which is still in the so-called green-state, thus leaving an impression on the surface thereof, a pattern or an embossed decoration or low relief, such that the above-mentioned relief or low relief remains impressed on the malleable surface of the product, before drying/baking the latter.

According to the teachings of patent EP 3 293 005, said pad can be advantageously provided by additive digital printing, depositing a liquid or a hardening mixture by one or more print heads movable according to a vertical axis and also movable along the printing area. Hardening means, in particular consisting of UV radiation emitters, are provided on the same print heads and provide the immediate hardening of the deposited liquid.

Multiple steps are obviously necessary both for covering the entire printing area and for providing the desired thickness in each single point.

The above-mentioned procedure, even if it is substantially in accordance with the purpose, however, tends to create printing defects due to the fact that the just-deposited ink, since it is in liquid form, is adjacent to the solidified ink.

In fact, during the different steps which are necessary to provide the single additive ink layer, the ink is immediately subjected to the UV radiations on the print head; so, when the same print head is taken back in the area for depositing ink laterally with respect to the area in which the ink is already solidified, a transition line is formed between said ink and the just-deposited ink, which is still liquid. Along the transition line, the applicant found a non-perfect adhesion among the solidified inks, which results in local surface defects.

Said defects, which, due to the geometry of the head, are generally located along longitudinal strips, affect the surface structure of the pad and consequently the embossment impressed on the tile, and can particularly affect the aspect of some tiles structured for reproducing natural materials, such as wood essences.

The technical problem underlying the present invention is therefore to provide a device for additive printing which can solve the inconveniences mentioned above so as to optimize the printing process and eliminate, or at least reduce, the above-mentioned surface defects.

### Summary of the invention

The technical problem previously identified is solved by a device for additive printing, preferably of the digital type, of an embossed surface above a product, comprising:
- a frame comprising a printing module;
- one or more print heads housed in the printing module and comprising a plurality of nozzles facing a printing area adapted to support said product, said nozzles being arranged to cover an entire printing area in order to deposit an additive ink on said product;
- movement means adapted to provide a relative movement between said product and said printing module along a longitudinal direction transversal to said printing area;
- solidification means for solidifying said additive ink placed to cover the entire printing area downstream said nozzles according to a preferred advancing direction of the printing along said longitudinal direction.

The extension of the nozzles which covers the entire printing area and the positioning of the solidification means downstream said nozzles avoid the occurrence of deposition of liquid ink adjacent to already-solidified ink corresponding to the same layer. The deposition in fact occurs simultaneously on the entire printing area, and the subsequent solidification also regards all the material deposited in that step. By preventing the deposition of liquid ink next to solidified ink, also the formation of the surface defects discussed with reference to the prior art is avoided, with consequent improvement of the surface decoration of the final product.

Preferably, the product, on which the embossed surface is provided, is a pad for a ceramic use or a coating for a pad for a ceramic use.

In a further embodiment, the product can be a belt of the flexible type, which is also configurable as a ring, adapted to be pressed against the surface of the ceramic products, so as to obtain, on the printing area, a pattern or embossed decoration or low relief complementary to the one on the flexible belt.

However, providing the embossed surface directly above a ceramic product should be excluded.

Preferably, the solidification means are placed directly on the printing module.

Even more preferably, the solidification means cover the same extension of said nozzles and are placed behind them according to a preferred advancing direction of the printing along said longitudinal direction.

In an embodiment variation, the solidification means can be provided on a structure different with respect to the printing module, otherwise fixed to the frame.

Preferably, the solidification means are irradiation means, such as UV LEDs, traditional UV and IR. In particular, they can result in lamps mounted on the printing module.

In an embodiment, in order to form further ink layers, the at least one printing module can continue the deposition without the printing module being repositioned to the initial position. In said embodiment, at least two solidification means are placed both upstream and downstream the at least one printing module, which solidification means are actuated in an alternate manner, based on the relative advancing direction of the printing module, that is from an initial position to a final position or vice versa.

Preferably, the ink is a UV polymerizable ink, comprising acrylic or epoxy monomers and oligomers and photoinitiators.

In particular, the ink belongs to the group of photo-hardening resins or polymers.

Preferably, the above-mentioned monomers or oligomers are selected among the following families: pure acrylics, polyester acrylates, polyurethane acrylates, epoxy acrylates, vinyl epoxies.

In a preferred embodiment, the ink can be a UV polymerizable ink which, once irradiated with ultraviolet light, is instantaneously cross-linked and solidifies.

The term "solidification" and the various meanings of the term associated with ink mean an ink which is hardened by irradiation means at a wavelength which allows to pass from a liquid to a solid state by a physical transformation.

The term "cross-linking" and the various meanings of the term associated with ink mean an ink which is hardened by forming transversal bonds among the molecules so as to provide molecular structures, similar to the meshes of a net, which develop in the three dimensions of the space.

In an embodiment, the device for additive printing comprises a solidification means which is simultaneously cross-linked and solidifies.

In a further embodiment, the device for additive printing comprises the solidification means different from the cross-linking means.

Due to the movement means defined above, the at least one printing module and the printing area to which the product is associated are respectively movable with respect to each other.

In a preferred embodiment, the movement means allow the linear translation of a cross member which supports said printing module with respect to the rest of the frame. In said embodiment, the printing area is defined by a fixed plane.

The cross member can be fastened to two upper rails or guides of the frame.

In an alternative embodiment, the movement means can consist of a conveyor belt which supports the translation of the product in a longitudinal direction under the printing module, which remains in this case fixed with respect to the rest of the frame.

Preferably, whether the printing module is movable with respect to the printing area or not, the printing module is structured as a portal or a shelf projecting above the printing area.

Preferably, the device for additive printing comprises second movement means for determining the position and/or the mutual distance on the vertical axis between the at least one printing module and the underlying product.

In a preferred embodiment, said second movement means act between the cross member and the printing module.

Preferably, the printing device comprises sensor means, associated with the at least one printing module, for detecting obstacles which can interfere with the movement of the at least one printing module.

Even more preferably, the sensor means comprise proximity sensors of the optoelectrical and/or mechanical or optical type.

Preferably, the printing device comprises at least one control unit for actuating the movement means, for selectively activating/deactivating the print heads, for selectively activating/deactivating the solidification means.

In a preferred embodiment, the control unit can be associated with a calculation device for example a personal computer, a laptop or a similar device, from which it can receive the data of the configuration of the embossed decorative pattern or low relief to be provided on the printing area.

Preferably, the printing area which is covered both by the nozzles and the solidification means is wide enough so as to comprise the width of a punch for tile, for example at least equal to 16 cm. However, in order to allow the processing of different formats, a wider printing area is preferred, equal to at least 50 cm.

The technical problem according to the present invention is also solved by an additive printing method for providing an embossed surface above a product of the above-discussed type, comprising the following steps:
a) arranging a product at a printing area;
b) supplying, by means of a printing module comprising a plurality of nozzles facing the printing area so as to cover an entire printing area comprising the transversal extension of the product, an additive ink layer on said product;
c) during the supply, providing a relative displacement between printing module and product along a longitudinal direction transversal to said printing area, from an initial position to a final position, such that the printing module passes above the entire product thus depositing an additive ink layer thereon;
d) during the displacement, progressively solidifying the additive ink through solidification means placed upstream the nozzles according to the relative displacement direction, said solidification means simultaneously acting on the entire printing area.

The method outlined above can be made with a device of the type discussed above.

Preferably, the method can comprise the further step of:
e) repeating the steps b)-d) by depositing and solidifying additive ink layers following the first one until reaching an embossed surface with desired three-dimensional pattern.

At each repetition of steps b)-d), the printing module can be conveniently raised with respect to the product so as to remain at a prefixed distance from the contact surface of the ink drops.

In an embodiment, during the deposit of the following additive ink layers, the relative displacement between printing module and product occurs in each-time-opposite directions, alternately using solidification means placed upstream and downstream the nozzles. In other words, if, in a first step, the relative displacement between printing module and product starts from the initial position and goes up to the final position, there is a relative displacement from the final position to the initial one in the following step.

In an alternative embodiment, the method provides an intermediate step d') of repositioning printing module and product in the relative initial position at the end of each printing step.

The printing method can still provide a step f) of final cross-linking of the different ink layers of the embossed surface through cross-linking means placed on a printing device comprising said at least one printing module.

Furthermore, the solidification step can occur simultaneously with a cross-linking step of the UV polymerizable ink.

In an alternative embodiment, the solidification step occurs separately from the cross-linking step of the UV polymerizable ink.

In particular, the cross-linking step occurs at the end of the deposition of the various ink layers through the cross-linking means actuated at the end of the deposition process of the various layers.

Advantageously, the printing device according to the present invention allows to deposit the liquid ink and subsequently to solidify it, so as to eliminate the classic adhesion problems which occur when the deposited liquid ink is in contact with the solidified ink.

Still more advantageously, the device allows to optimize the decorative pattern thanks to the above-mentioned advantage by eliminating surface defects, caused exactly by the liquid ink-solid ink contact.

Advantageously, the printing device, thanks to the deposition of each additive ink layer in a single step, speeds up the printing process thus reducing costs and duration of the process.

Further characteristics and advantages will become more apparent from the detailed description, made herein in the following, of two preferred, but not exclusive, embodiments of the present invention, with reference to the attached figures given by way of a non-limiting example.

### Brief description of the drawings

Figures 1-4 represent a prospective view of a device for additive printing according to the present invention according to different view points;

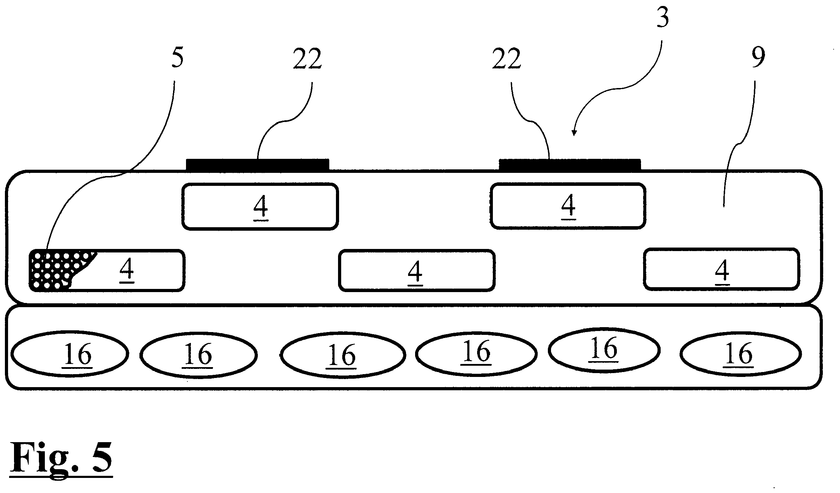

figure 5 represents a schematic view of an exemplifying positioning of the print heads and of the solidification means according to the present invention;

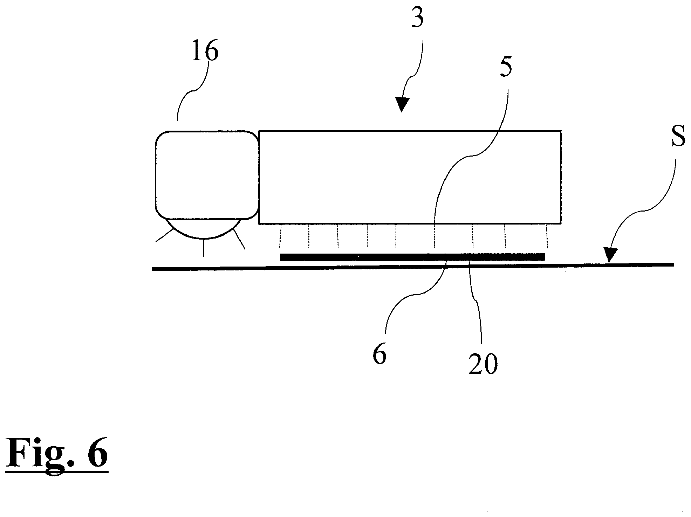

figure 6 represents a schematic view of the printing device according to the present invention;

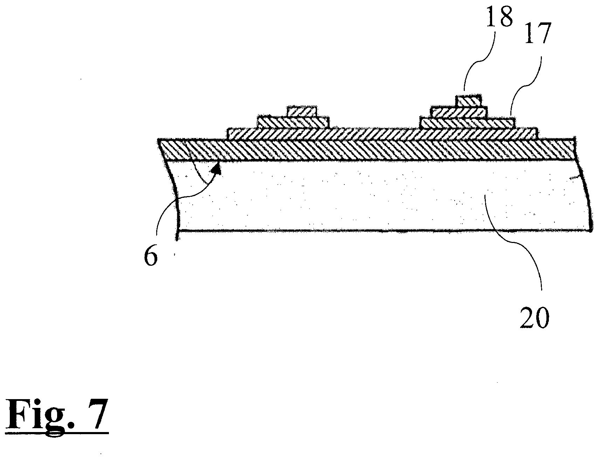

figure 7 schematically represents the layers obtained according to the present invention.

### Detailed description

In the following of the present invention, it should be understood that the technical characteristics specifically described previously and in the following can be combined with each other in any way, thus constituting further embodiments of the present invention which are not specifically described for reasons of conciseness but are falling within the scope of protection of the present invention.

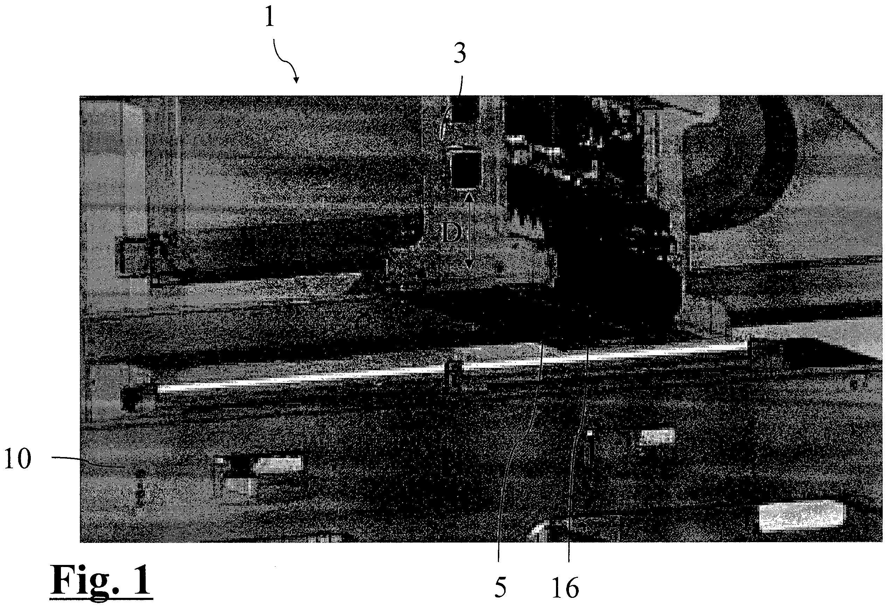

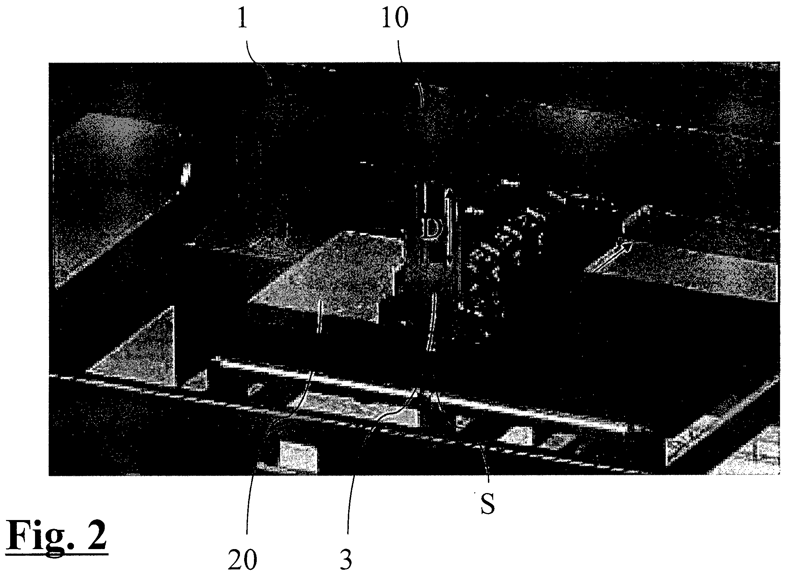

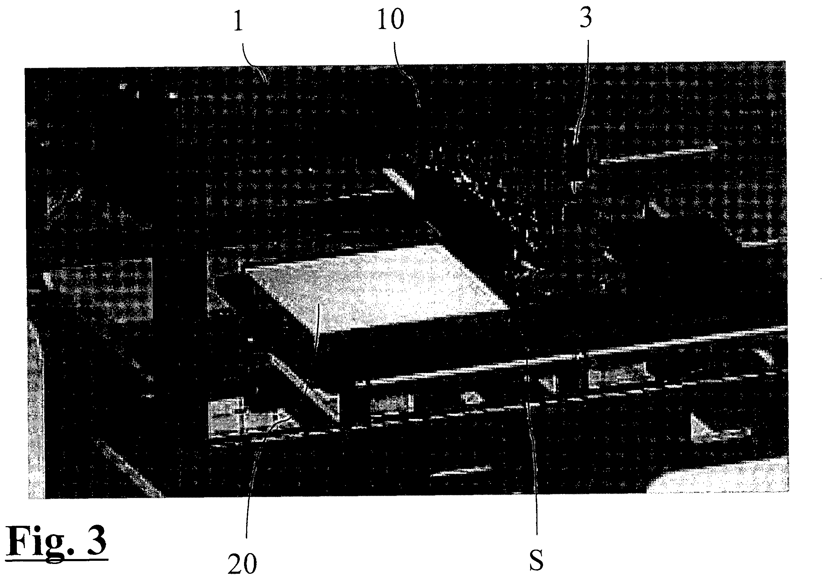

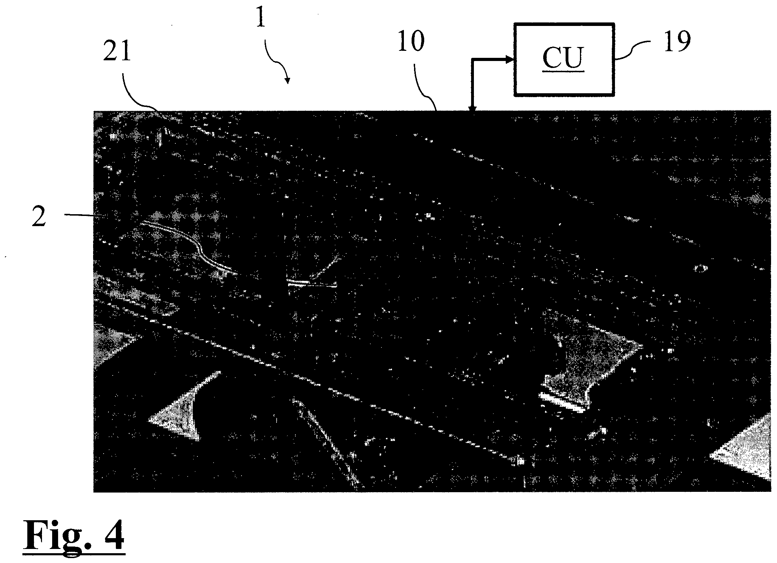

Referring to the attached figures 1-4, 1 globally identifies a device for the additive printing according to the present invention.

Said device for the additive printing 1 is illustrated in the above-mentioned figure in a schematic manner, omitting some construction elements which are in se known and graphically simplifying the represented elements.

The device for additive printing 1 is configured to provide an embossed surface or low relief 6 above a product 20, in particular a ceramic punch, through a process of the additive type.

In the following of the description, terms such as above, under, lower, upper or derivates thereof should be intended with reference to the normal use configuration of the device for additive printing 1 illustrated in the aforementioned figures.

In particular, the device for additive printing 1 is configured to provide, on a printing area S, at least one embossed pattern or low relief 6 on a punch 20 to be impressed on the malleable surface of ceramic products.

The device for additive printing 1 comprises, in a known manner, a frame 10, provided with an upper port to which a cross member 2 supporting a printing module 3 is slidingly associated, according to a longitudinal direction X. The frame also provides movement means 21 which are able to translate the cross member along the above-mentioned longitudinal direction X, following two upper lateral guides to which the cross member 2 is slidingly fastened.

The frame 10 also comprises a fixed plane lower than the portal which defines a printing area on which the product 20 to be structured is positioned.

The printing module 3 is fastened to the cross member 2 through second movement means which allow the relative lowering or rising thereof, according to a vertical direction D, with respect to the printing area S.

The printing module 3 extends along the printing area Y substantially orthogonally to the longitudinal direction X. It has a lower portion which develops close to the printing area S and which houses one or more print heads 4 comprising nozzles 5. Said print heads 4 are obviously facing the printing area S with the nozzles 5; the operating surface of the nozzles 5 is identified in the following as nozzle plate.

The print heads 4 are mounted on a head holder bar 9, which results in a metal base, preferably in aluminum, extended along the longitudinal direction Y and which defines a bottom element of the printing modules 3.

The print heads 4 are mounted to the head holder bar 9 without interruptions along the entire printing area Y; in other words, the print heads 4 are positioned along the head holder bar such that a following print head 4 is longitudinally juxtaposed at the longitudinal end of a print head 4.

As mentioned above, a substantially plane product 20, in particular a tab, on which the embossed surface 6 is deposited, should be positioned on the printing area S.

The embossed surface 6 can be made of metal or resin or a material arranged to resist to the compression stresses to which it is subjected while used.

The coating to be applied on the embossed surface 6 can be made of a flexible material, such as rubber or similar.

The above-mentioned punch 20 provided with the embossed surface 6 is arranged to be associated with pressing means, not illustrated in the figures, arranged to press the surface of the decoration means against a ceramic product to be decorated.

The additive printing device 1 allows to provide a decorative pattern of substantially any size, based on the dimensions of the ceramic products to be decorated and on specific production needs. By means of the printing modules 3, it is possible to provide the desired embossed decorative pattern or low relief which will be impressed on a ceramic product.

As previously mentioned, the device for additive printing comprises second movement means, not represented in the figure, which are connected to the cross member 2 so as to allow the lifting of the printing modules 3 in a vertical direction, during the ink supply and deposition step and successively during the solidification step.

The relative distance between the printing modules 3 and the product 20 is thus modified along a vertical direction D, that is a direction perpendicular to the printing area S and orthogonal to the longitudinal direction X. Said direction D is modified based on the height reached by successively deposited ink layers 17,18 in order to obtain the embossed pattern 6.

Solidification means 16 of the ink released by the plurality of print heads 4 are also provided. Said solidification means 16 result in irradiation means arranged to emit radiations which accelerate the hardening or solidification of the deposited ink.

The irradiation means 16 are arranged on the printing module 3 or in a structure directly adjacent thereto, downstream the nozzles 5, in order to irradiate the ink deposited on the product 20 after the deposition.

The irradiation means are UV lamps which solidify the deposited ink. In particular, the used ink comprises acrylic or epoxy monomers and oligomers and photoinitiators, that is they are photo-hardening inks. Thus, the composition of the ink will provide different polyester acrylates and polyurethane acrylates, which, as soon as they are irradiated by UV light, are cross-linked as well as they solidify.

The irradiation means 16 comprise UV radiation emitters.

Based on the waves for which the irradiation means are set, beside the function of solidifying the various ink layers, said means have the possibility to cross-link the ink layers at the end of the deposition and solidification.

The printing device further comprises a control unit 19 operatively associated with the printing module 3. The control unit 19 is configured to control and verify the operation of the print heads 4 and the irradiation means 16.

The control unit 19 is also operatively associated with the movement means 21, in order to control the movement of the frame components 10 and of the printing modules 3 associated thereto.

Proximity sensor means 22 of the optoelectronic type, which allow to measure the thickness of the reached decorative pattern or other parameters so as to optimize the printing process, can be placed upstream the printing modules 3. Said sensor means 22 are connected to the calculation device present in the control unit, which calculation device receives the data of the configuration of the decorative pattern, so as to send said data to the control unit and control the additive printing process.

The device for additive printing 1 allows to form different ink layers 17, 18 arranged so as to form the embossed decorative pattern or low relief of the printing area S. The single layers 17, 18 are deposited along the external surface in use of the product 20 and are obtained by the deposition of drops or micro-drops of an ink mixture which is solidified by means of the above-mentioned irradiation means 16. The cross-linking occurs at the end of the deposition and solidification of the single layers 17, 18.

In order to provide the embossed relief 6, the product 20, in this case a punch for a ceramic use, is placed on the printing area S.

Through a computer, the printing area data S for providing the decorative pattern are transmitted to the control unit 19.

The control unit 19 thus actuates the movement means, causing the passage of the printing module 3 above the product 20, and simultaneously commanding the release of ink drops from the print heads 4 on the product 20.

Simultaneously, the irradiation means 16 are actuated, which are always commanded by the control unit 19 which activates/deactivates the irradiation means 16 in order to determine the solidification of the deposited ink.

Said solidification step is subsequent to the ink supply and deposition step such that the deposited liquid ink is not in contact with the solidified ink, so as to obviate adhesion problems due to different statuses of the ink (solid-liquid) and reduce the surface defects.

When the final relative position of the product 20 with respect to the printing modules was reached, the first ink layer 17 was deposited and solidified. The movement means 21 are then restarted in order to take back the printing module 3 in the initial position and thus begin to deposit the second layer 18 analogously to the described previous one, until obtaining the desired embossed decorative pattern 6.

As suggested in the summary of the invention, the step of taking back the printing module 3 in the initial position can be omitted if the different passages are provided by alternately moving the printing module 3; in this case, irradiation means 16 upstream and downstream the nozzles 5 are provided.

It can be also observed that the relative movement between printing module 3 and product 20 can be also provided by moving the product 20 under the fixed printing module 3, without departing from the scope of the present invention.

Obviously, a person skilled in the art, in order to meet contingent and specific needs, can make various modifications and variations to the invention described above, all of which are contained within the scope of protection of the invention as defined by the following claims.

## Claims

1. Device for additive printing (1) of an embossed surface (6) above a product (20), comprising:
- a frame (10) comprising a printing module (3);
- one or more print heads (4) housed in the printing module (3) and comprising a plurality of nozzles (5) facing a printing area (S) arranged to support said product (20), said nozzles (5) being arranged to cover an entire printing area (Y) in order to deposit an additive ink on said product (20);
- movement means (21) arranged to provide a relative movement between said product (20) and said one printing module (3) along a longitudinal direction (X) transversal to said printing area (Y);
- solidification means (16) of said additive ink placed to cover the entire printing area (Y) downstream said nozzles (5) according to a preferred advancing direction of the printing along said longitudinal direction (X).

2. Device for additive printing (1) according to one of the previous claims, wherein said product (20) is a punch for a ceramic use or a punch covering for a ceramic use.

3. Device for additive printing (1) according to claim 1, wherein said product (20) is a ceramic tile on which the embossed surface (6) is directly deposited.

4. Device for additive printing (1) according to one of the previous claims, wherein said solidification means (16) are placed directly on the printing module (3).

5. Device for additive printing (1) according to claim 4, wherein said solidification means (16) cover the same extension of said nozzles (5) and are placed behind them according to a preferred advancing direction of the printing along said longitudinal direction (X).

6. Device for additive printing (1) according to one of the previous claims, wherein the solidification means (16) are placed both downstream and upstream said nozzles (5) so as to allow the relative displacement between the printing module (3) and the product (20) in both directions along the longitudinal direction (X).

7. Device for additive printing (1) according to one of the previous claims, wherein the solidification means (16) are irradiation means, such as UV LEDs, traditional UV and IR.

8. Device for additive printing (1) according to claim 7, wherein the ink is an ink which solidifies though UV, comprising acrylic or epoxy monomers and oligomers and photoinitiators.

9. Device for additive printing (1) according to claim 6, wherein said monomers and oligomers are selected among the following families: pure acrylics, polyester acrylates, polyurethane acrylates, epoxy acrylates, vinyl epoxies.

10. Device for additive printing (1) according to one of the previous claims, wherein said movement means (21) allow the linear translation of a cross member (2) which supports said printing module (3) with respect to the rest of the frame (10).

11. Device for additive printing (1) according to the previous claims, wherein the printing device (1) comprises sensor means (22), associated with the printing module (3), for detecting obstacles which can interfere with the relative movement between product (20) and printing module (3).

12. Additive printing method for providing an embossed surface (6) above a product (20), comprising the following steps:
a) arranging a product (20) at a printing area (S);
b) supplying, by means of a printing module (3) comprising a plurality of nozzles (5) facing the printing area (S) so as to cover an entire printing area (Y) comprising the transversal extension of the product (20), an additive ink layer on said product (20);
c) during the supply, providing a relative displacement between printing module (3) and product (20) along a longitudinal direction (X) transversal to said printing area (Y), from an initial position to a final position, such that printing module (3) passes above the entire product (20) depositing an additive ink layer thereon;
d) during the displacement, progressively solidifying the additive ink through solidification means (16) placed downstream the nozzles (5) according to the relative displacement direction, said solidification means (16) simultaneously acting on the entire printing area (Y).

13. Additive printing method according to claim 12, furthermore comprising the steps of:
e) repeating steps b)-d) by depositing and solidifying additive ink layers following the first one until reaching an embossed surface (6) with a desired three-dimensional pattern.

14. Additive printing method according to claim 13, wherein, during the deposit of the following additive ink layers, the relative displacement between printing module (3) and product (20) occurs in each-time-opposite directions, alternatively using solidification means (16) placed downstream and upstream the nozzles (5).

15. Additive printing method according to one of the claims 12-14, furthermore comprising a step f) of final cross-linking of the different ink layers (6) of the embossed surface through cross-linking means placed on a printing device (1) comprising said printing module (3).
